# EUROPÄISCHE PATENTANMELDUNG

(11) **EP 2 617 652 A1**
(43) Veröffentlichungstag der Anmeldung: **24.07.2013**
(21) Anmeldenummer: 13164438.7
(22) Anmeldetag: 11.05.2011
(51) Int. Cl.: B65B 43/52, B65G 45/02, B65G 21/20

(54) **Führungseinsatz für eine Einrichtung zum transportieren von Pet-Flaschen**

(30) Priorität: 05.07.2010 DE 102010017724
(62) Teilanmeldung aus: 11165605.4
(71) Anmelder: Krones AG, 93073 Neutraubling (DE)
(72) Erfinder: Seger, Martin, 92318 Neumarkt i. d. Opf. (DE); Hüttner, Johann, 84066 Mallersdorf-Pfaffenberg (DE)
(74) Vertreter: Reichert, Werner Franz

(57) **Zusammenfassung**

Es ist ein Führungseinsatz (3) für eine Einrichtung (10) zum Transportieren von PET-Flaschen (12) offenbart. Der Führungseinsatz (3) ist an einem Geländer (1) oder direkt auf einem Tragelement (9) befestigt, wobei eine den PET-Flaschen (12) zugewandte Oberfläche (5) des Führungseinsatzes (3) die PET-Flaschen (12) während des Transports berührt. Die die PET-Flaschen (12) berührende Oberfläche (5) des Führungseinsatzes (3) trägt ein Polymermaterial (P), welches mit einem Füllstoff versehen ist. Ebenso kann die die PET-Flaschen (12) berührende Oberfläche (5) des Führungseinsatzes (3) ein Polymermaterial (P) tragen, wobei dabei mindestens eine Oberfläche (5) des Führungseinsatzes (3) an mindestens einer Stelle entlang des Führungseinsatzes (3) ein Schmiermittel zuführbar ist.

## Beschreibung

Die vorliegende Erfindung betrifft einen Führungseinsatz für eine Einrichtung zum Transportieren von PET-Flaschen. Der Führungseinsatz ist dabei an einem Geländer oder direkt auf einem Tragelement befestigt, wobei eine den PET-Flaschen zugewandte Oberfläche des Führungseinsatzes die PET-Flaschen während des Transports berührt.

Aus dem Stand der Technik sind Einrichtungen zum Transportieren von Behältern aus einem Kunststoff, beispielsweise Polyethylenterephthalat (PET), bekannt. Die Einrichtungen benutzen Geländer, um die Behälter oder Flaschen entlang des Transportwegs zu führen und zu sichern, so dass ein sicherer Transport der Behälter gewährleistet ist. Bei einem einbahnigen Transport der Behälter ist es empfehlenswert, dass beidseitig des Transportwegs ein Geländer vorgesehen ist. Bei einem mehrbahnigen Transportweg ist es ausreichend, dass jeweils ein Geländer auf den Außenseiten des Transportweges vorgesehen ist.

So offenbart die japanische Patentanmeldung JP 2005289610 A2 eine Führungsschiene, die aus einem Material besteht, das eine bessere Abriebbeständigkeit, eine bessere Schlagbeständigkeit und eine bessere Gleiteigenschaft als herkömmliche Materialien für Führungsschienen besitzt. Das Material der Führungsschiene besteht aus einem Polyethylen (PE), wobei die Polymerketten ein sehr hohes Molekulargewicht haben (PE-UHMW). Die Abnutzung der Führungsschiene kann leicht dadurch bestimmt werden, dass am Grund einer Kerbe oder Nut der Führungsschiene eine farbliche Kennzeichnung angebracht ist. Ist die farbliche Kennzeichnung abgenutzt, muss die Führungsschiene ausgetauscht werden.

Aus dem U.S. Patent US 3,491,873 sind Führungsschienen oder Geländer für eine Einrichtung zum Transportieren von Behältern bekannt. Die Führungsschiene besteht aus einem steifen Trägermaterial, das zur Aufnahme eines Einsatzes aus Plastik entsprechend ausgestaltet ist. Das Trägermaterial besteht aus Aluminium. Der sich während des Gebrauchs abnutzende Plastikeinsatz kann einfach ausgewechselt werden. Es ist nicht erforderlich, dass das gesamte Geländer ausgetauscht werden muss. Der Plastikeinsatz ist form- und/oder kraftschlüssig am steifen Trägermaterial befestigt.

Das europäische Patent EP 0 891 933 B1 offenbart eine Führungsschiene, die ein metallisches Kanalelement besitzt, das aus Seitenwänden gebildet ist. Zwischen den Seitenwänden ist ein Kunststoffeinsatz aufgenommen.

Die deutsche Offenlegungsschrift DE 10 2006 049 488 A1 offenbart eine Vorrichtung zum Behandeln von flachen, zerbrechlichen Substraten. Die Substrate werden in einer Behandlungskammer mit einer Behandlungsflüssigkeit beaufschlagt. Sie werden dazu von einer Transporteinrichtung im horizontalen Durchlauf durch die Behandlungskammer geführt. Seitenführungseinrichtungen, die zylindrische, drehbar gelagerte Seitenführungsrollen aufweisen, stellen eine vorteilhafte, in einer Förderrichtung ausgerichtete Beförderung der Substrate sicher. Für die Seitenführungsrollen ist Polytetrafluorethylen (PTFE) oder Polyetereterketon (PEEK) ein geeignetes Material.

Die deutsche Offenlegungsschrift DE 100 23 151 A1 offenbart eine Transportriemenanordnung zum Transport und/oder zur Wendung von flächigem Material. Die Transportflächen der Riemen sind über rotierende, scheiben- oder walzenförmige Umlenkelemente geführt, wobei die Umlenkelemente mit einer den Riemen führenden Ausnehmung versehen sind. Die Ausnehmung ist von Flächen begrenzt, die Flanken reibungsvermindernde Materialien enthalten oder aus diesen bestehen. Die reibungsvermindernden Materialien sind PTFE oder PEEK.

Die japanische Patentanmeldung JP 06227632 beschreibt eine Förderkette, bei der der innere Durchmesser der Rollen aus einem PEEK besteht.

Aufgabe der Erfindung ist, einen einfachen und kostengünstigen Führungseinsatz zum Transportieren von Behältern bzw. PET-Flaschen anzugeben, das einen im Wesentlichen gleichbleibenden Transport der Behälter gewährleistet. Hinzu kommt, dass mit dem erfindungsgemäßen Führungseinsatz die Reibungsverhältnisse während der Gebrauchsdauer im Wesentlichen unverändert bleiben.

Die obige Aufgabe wird durch einen Führungseinsatz für eine Einrichtung zum Transportieren von PET-Flaschen oder Behältern gelöst, der die Merkmale des Patentanspruchs 1 oder 6 umfasst.

Versuche in letzter Zeit haben gezeigt, dass die Berührung der zu transportierenden Behälter bzw. PET-Flaschen mit einem Geländer zu einer erhöhten Reibung zwischen den zu transportierenden Behältern und dem Geländer führen. Es ist zu vermuten, dass sich aus der äußeren Oberfläche der PET-Flaschen Polymerketten herauslösen und sich am Geländer, das im Wesentlichen aus PE-Platten besteht, anlagert. Dieser Prozess entspricht der Adhäsion der PET-Ketten am PE-Material des Geländers.

Es ist erkannt worden, dass der Führungseinsatz für eine Einrichtung zum Transportieren von PET-Flaschen an einem Geländer oder direkt auf einem Tragelement zu befestigen ist. Der Führungseinsatz ist dabei derart gestaltet, dass ausschließlich eine den PET-Flaschen zugewandte Oberfläche des Führungseinsatzes die PET-Flaschen während des Transports berührt. Dabei trägt zumindest die die PET-Flaschen berührende Oberfläche des Führungseinsatzes ein Polymermaterial, das bei 23°C einen größeren E-Modul als PET und bei 100°C selbst einen um weniger als 20% niedrigeren E-Modul besitzt.

Gemäß einer Ausführungsform ist die die PET-Flaschen berührende Oberfläche des Führungseinsatzes eine Beschichtung aus diesem Polymermaterial. Ferner ist es denkbar, dass das Material des gesamten Führungseinsatzes aus solch einem Polymermaterial besteht.

Der Führungseinsatz ist bevorzugt form- und/oder kraftschlüssig am Geländer befestigt, wobei auch mehrere Führungseinsätze übereinander am Geländer fixiert werden können. Die Anzahl der Führungseinsätze, die am Geländer angebracht werden, richtet sich im Prinzip nach der Form der zu Transportierenden Behälter. Das Geländer selbst kann zur weiteren Stabilisierung auf einem zusätzlichen Tragelement montiert sein. Das Tragelement ist üblicherweise aus einem Metall gefertigt.

Das Geländer selbst besteht aus Polyvinylchlorid (PVC), Polyethylen (PE), Polyethylen mit hohem Molekulargewicht (PE-UHMW) oder Polyethylen mit hoher Dichte (PE-HD). Das Polymermaterial des Führungseinsatzes oder das der Beschichtung auf dem Führungseinsatz kann PEEK, Polyphenylether (PPE) oder Polyetherimid (PEI) sein. Für manche Anwendungen ist es auch denkbar, dass das Tragelement die Funktion des Geländers mit übernimmt und der Führungseinsatz direkt auf dem Tragelement befestigt wird.

Zur Erhöhung der mechanischen Stabilität kann das Polymermaterial mit einem Füllstoff versehen werden. Die Füllung des Polymermaterials empfiehlt sich dann, wenn der gesamte Führungseinsatz aus dem Material gefertigt ist, das auch mit der Außenfläche der zu transportierenden Behälter in Berührung kommt. Als Füllmaterial kann man z.B. Glasfasern verwenden. Desweiteren bieten sich auch Glas- oder Keramikkugeln an, welche die mechanische Stabilität erhöhen.

Ein weiterer Vorteil bieten die Glas- oder Keramikkugeln dahingehend, dass durch die hügelige Oberfläche der Berührungsflächen zu den PET-Flaschen die Reibung gravierend reduziert werden kann. Damit ist es auch vorstellbar, dass herkömmliche Trägermaterialien wie beispielsweise Polyamid (PA), Polyoxymethylen (POM). Polyvinylchlorid (PVC), Polyethylen (PE), Polyethylen mit hohem Molekulargewicht (PE-UHMW) oder Polyethylen mit hoher Dichte (PE-HD) versehen mit abgerundeten oder kugelförmigen Elementen, wie beispielsweise Glas- oder Keramikkugeln, als einheitliches Geländer mit den PET-Flaschen zusammenwirken können. Die hinzugefügten Elemente erhöhen dabei die Rauheit der Oberfläche auf ein Maß, dass größer der Rauheit des Grundmaterials und/oder Trägermaterials (eigentlich der Führungsschiene oder des Führungseinsatzes) liegt. Der mittlere Durchmesser der Elemente liegt dabei im Millimeterbereich, vorzugesweise kleiner als ein Millimeter und besonders vorzugsweise sogar unter einem halben Millimeter.

Auf dem gleichen Wirkprinzip mit einer reduzierten Kontaktfläche beruht ein oberflächenbehandeltes Geländer oder Führungseinsatz, welches eine Struktur mit Erhöhungen und/oder Vertiefungen aufweist. Dazu kann die Anlegefläche mit Nuten, vorzugsweise Rillen oder besonders vorzugsweise mit einer sonstigen Profilierung ähnlich einer genarbten oder wellenförmigen Kontur versehen werden, die insgesamt gesehen eine im Wesentlichen einheitlich zusammenwirkende Anlagefläche im Kontaktbereich bildet, ohne dass die PET-Flaschen sich partiell deformieren und dadurch teilweise in die Vertiefungen eindringen und somit die Berührpunkte erhöhen können. Die beabsichtigten Unebenheiten erhöhen dabei die Rauheit der Oberfläche wiederum auf ein Maß, dass größer der Rauheit des Grundmaterials und/oder Trägermaterials (eigentlich der Führungsschiene) liegt. Die Varianz zwischen den Höhen und Tiefen liegt dabei im Millimeterbereich, vorzugesweise kleiner als zwei Millimeter und besonders vorzugsweise sogar unter einem Millimeter.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
- **Figur 1**: zeigt eine schematische Ansicht einer Einrichtung zum Transport von Behältern mit einer Ausführungsform des erfindungsgemäßen Führungseinsatzes, wobei die Transporteinrichtung in die Zeichenebene hinein oder aus der Zeichenebene heraus gerichtet ist.
- **Figur 2**: zeigt eine Seitenansicht einer anderen Ausführungsform des erfindungsgemäßen Führungseinsatzes.
- **Figur 3**: zeigt eine vergrößerte Darstellung des in Figur 2 mit A gekennzeichneten Bereichs.
- **Figur 4**: zeigt eine weitere Ausführungsform des erfindungsgemäßen Führungseinsatzes an einem Geländer.
- **Figur 5**: zeigt eine vereinfachte Darstellung des Geländers, in das der in Figur 4 gezeigte Führungseinsatz eingesetzt werden kann.
- **Figur 6**: zeigt eine weitere Ausführungsform des Führungseinsatzes.
- **Figur 7**: zeigt eine weitere Ausführungsform des Führungseinsatzes, bei dem das die PET-Flaschen berührende Material als Beschichtung vorgesehen ist.
- **Figur 8**: zeigt eine schematische Ansicht einer Ausführungsform der Einrichtung zum Transport von Behältern, wobei der erfindungsgemäße Führungseinsatz an mindestens einer Seite, die die zu transportierenden Behälter berührt, mit einem Schmiermittel versehen werden kann, um die Reibung zu reduzieren.
- **Figur 9**: zeigt eine schematische Ansicht einer weiteren Ausführungsform der Einrichtung zum Transport von Behältern, wobei der erfindungsgemäße Führungseinsatz an mindestens einer Seite, die die zu transportierenden Behälter berührt, mit einem Schmiermittel und Wasser versehen werden kann, um die Reibung zu reduzieren.
- **Figur 10a**: zeigt eine schematische Ansicht des erfindungsgemäßen Führungseinsatzes, dessen Oberfläche, welche die zu transportierenden Behälter berührt, eine Oberflächenstruktur ausgebildet hat, die den Reibwert zwischen Führungseinsatz und Behälter senkt.
- **Figur 10b**: zeigt einen Querschnitt der Ausführungsform des Führungseinsatzes nach Figur 10a.
- **Figur 11a**: zeigt eine schematische Ansicht einer weiteren Ausführungsform des erfindungsgemäßen Führungseinsatzes, dessen Oberfläche, welche die zu transportierenden Behälter berührt, eine Oberflächenstruktur ausgebildet hat, die den Reibwert zwischen Führungseinsatz und Behälter senkt.
- **Figur 11b**: zeigt einen Querschnitt der Ausführungsform des Führungseinsatzes nach Figur 11a.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie der erfindungsgemäße Führungseinsatz ausgestaltet sein kann und stellen keine abschließende Begrenzung dar.

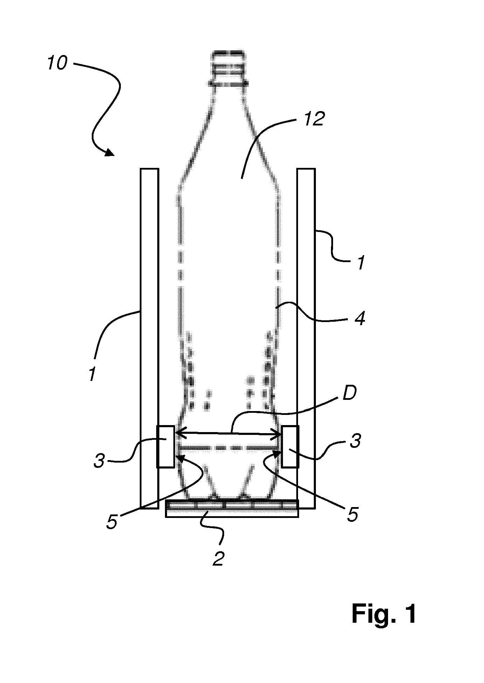

**Figur 1** zeigt eine schematische Darstellung einer Einrichtung 10 zum Transportieren von PET-Flaschen 12. In der in Figur 1 gezeigten Darstellung werden die PET-Flaschen 12 einbahnig auf einem Transportband 2, in der Regel, Stoß an Stoß transportiert. Beim einbahnigen Transport ist es empfehlenswert, dass beidseitig des Transportbandes 2 jeweils ein Geländer 1 vorgesehen ist. Die Anordnung der beiden Geländer 1 an den Seiten des Transportbandes 2 bildet somit eine Gasse aus, in der die PET-Flaschen 12 transportiert werden. Jedes der Geländer 1 trägt einen erfindungsgemäßen Führungseinsatz 3, der derart am Geländer 1 angebracht ist, dass eine den PET-Flaschen 12 zugewandte Oberfläche 5 des Führungseinsatzes 3 die PET-Flaschen 12 während des Transports berührt. Es ist für einen Fachmann selbstverständlich, dass die Erfindung nicht auf den einbahnigen Transport von PET-Flaschen 12 beschränkt ist. Bei der Verwendung des Geländers 1 reicht es aus, dass das Geländer 1 lediglich auf einer Seite des Transportbandes 2 vorgesehen ist. Besonders ist dies bei Richtungsänderungen des Transports der PET-Flaschen 12 der Fall. Insbesondere bei den Richtungsänderungen werden die PET-Flaschen 12 auf eine Seite, die Kurvenaußenseite des Transportbandes 2, gedrängt. Das Geländer 1 verhindert, dass die PET-Flaschen 12 von dem Transportband 2 fallen. Gerade auch bei Richtungsänderungen des Flaschentransports sind der Druck und die Krafteinwirkung auf das Geländer 1 erhöht. Um auch die Reibung der PET-Flaschen 12 am Geländer 1 zu minimieren, ist am Geländer 1 der Führungseinsatz 3 vorgesehen, so dass die zu transportierenden PET-Flaschen 12 nur mit einem Teil ihrer Mantelflächen 4 mit dem Führungseinsatz 3 in Berührung kommen. Es ist empfehlenswert, den Führungseinsatz 3 im Bereich des maximalen Standkreisdurchmessers D der PET-Flaschen 12 anzubringen.

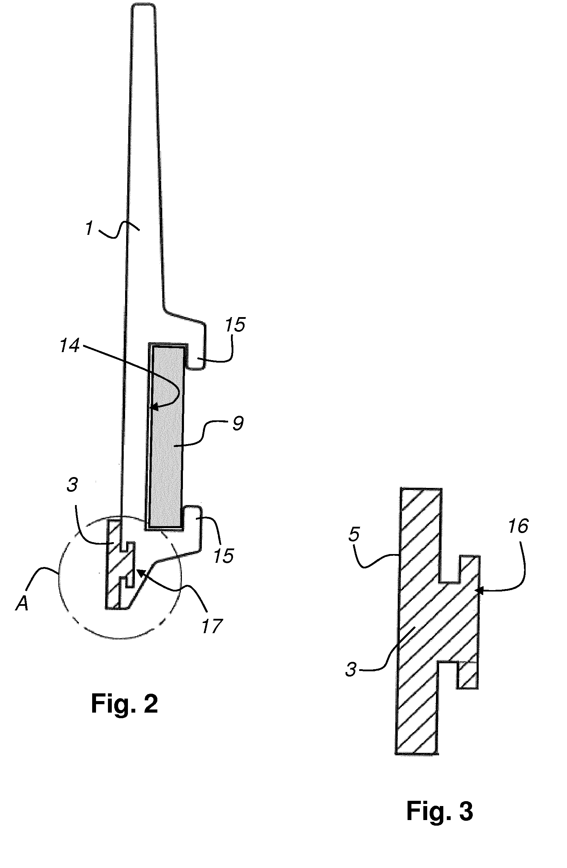

**Figur 2** zeigt eine Seitenansicht einer möglichen Ausführungsform des erfindungsgemäßen Führungseinsatzes 3. Der Führungseinsatz 3 ist bei dieser Ausführungsform form- und kraftschlüssig am Geländer 1 gehaltert. Das Grundmaterial des Geländers 1 besteht aus Polyethylen (PE). Aufgrund der Berührung der PET-Flaschen 12 mit dem Grundmaterial des Geländers 1 treten Effekte auf, die den Reibwert zwischen den PET-Flaschen 12 und dem Geländer 1 erhöhen. Erfindungsgemäß wird dieses Problem dadurch gelöst, dass zumindest die die PET-Flaschen 12 berührende Oberfläche 5 des Führungseinsatzes 3 aus einem Polymermaterial P besteht, das bei 23°C einen größeren E-Modul als PET und bei 100°C selbst einen um weniger als 20% niedrigeren E-Modul besitzt. Das Geländer 1 hat eine Aufnahme 14 für ein Tragelement 9 ausgebildet. Die Aufnahme 14 hat aus dem Material des Geländers 1 zwei gegenüberliegende Haken 15 ausgebildet, die das Geländer 1 am Tragelement 9 halten. Das Tragelement 9 dient zur mechanischen Stabilisierung des Geländers 1.

**Figur 3** zeigt eine vergrößerte Darstellung des in Figur 2 mit A gekennzeichneten Bereichs um den Führungseinsatz 3. Wie bereits in der Beschreibung zu Figur 2 erwähnt, besteht der gesamte Führungseinsatz 3 aus einem Material, wie z.B. PEEK, PPE oder PEI. Der Führungseinsatz 3 wird als Profil extrudiert und hat eine Montagestruktur 16 ausgebildet, die mit einer entsprechenden Negativform 17 des Geländers 1 zur Befestigung zusammenwirkt. Die Oberfläche 5 des Führungseinsatzes 3 wirkt mit den zu transportierenden PET-Flaschen 12 zusammen.

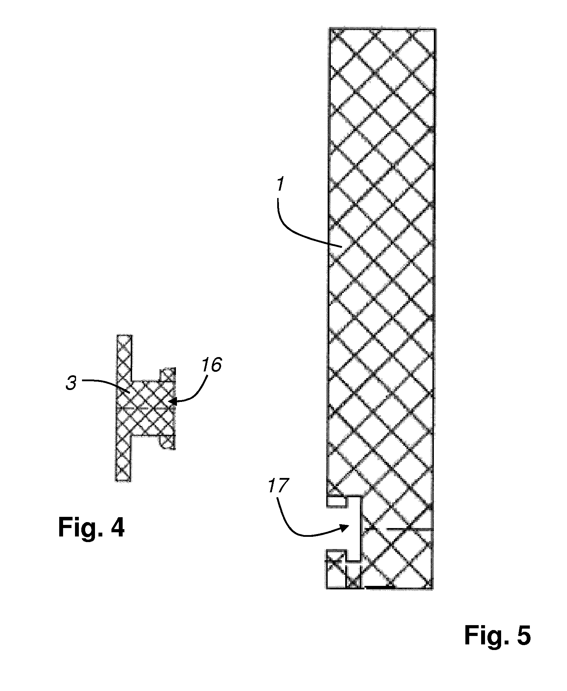

**Figur 4** und **Figur 5** zeigen eine weitere Ausführungsform des Führungseinsatzes 3 und des Geländers 1. Das Geländer 1 ist in Form eine Platte (aus PE-Material) ausgebildet, in der die Negativform 17 für die Aufnahme der Montagestruktur 16 des Führungseinsatzes 3 ausgebildet ist.

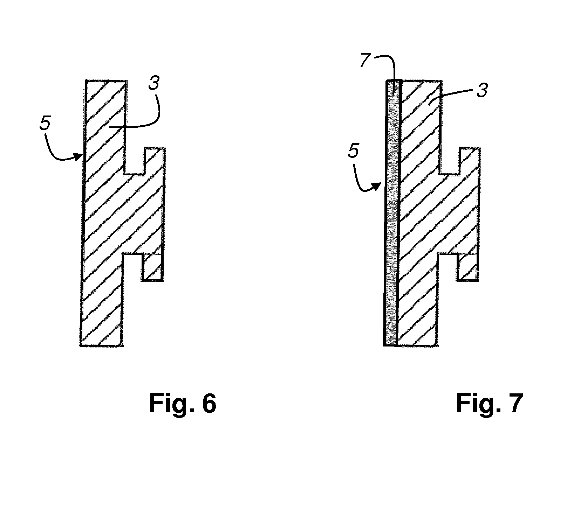

**Figur 6** zeigt eine Ausführungsform des Führungseinsatzes 3. Der gesamte Führungseinsatz 3 ist aus einem Material, wie z.B. PEEK, PPE oder PEI, gefertigt. Somit liegt dieses Material auch an der Oberfläche 5 des Führungseinsatzes 3 vor und während des Transports der PET-Flaschen 12 berührt zumindest ein Abschnitt der Mantelfläche 4 der PET-Flaschen 12 die Oberfläche 5 des Führungseinsatzes 3.

**Figur 7** zeigt eine weitere Ausführungsform des Führungseinsatzes 3. Der Führungseinsatz 3 trägt eine Beschichtung 7 an der Oberfläche 5, so dass die PET-Flaschen 12 nur die Beschichtung 7 der Oberfläche 5 des Führungseinsatzes 3 berühren. Die Beschichtung 7 besteht aus PEEK, PPE oder PEI. Diese Materialien sind im hochpreisigen Segment anzusiedeln, so dass die Ausbildung einer Beschichtung 7 auf dem Führungseinsatz 3 keine kostengünstige Lösung darstellt. Das Trägermaterial bzw. der Rest des Führungseinsatzes 3 kann aus dem gleichen und kostengünstigen Material wie das Geländer 1 gefertigt sein. Bevorzugt ist das Material des Geländers 1 aus PE, PE-UHMW oder PE-HD.

Die Beschichtung 7 kann auch mit einem nanotechnologischen Verfahren auf den Führungseinsatz 3 aufgebracht werden, so dass die Oberfläche 5 die für den Transport der PET-Flaschen 12 erforderliche Eigenschaft besitzt.

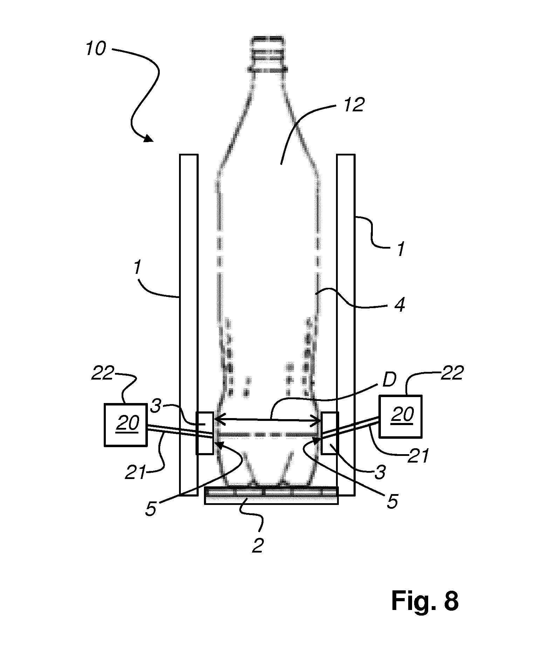

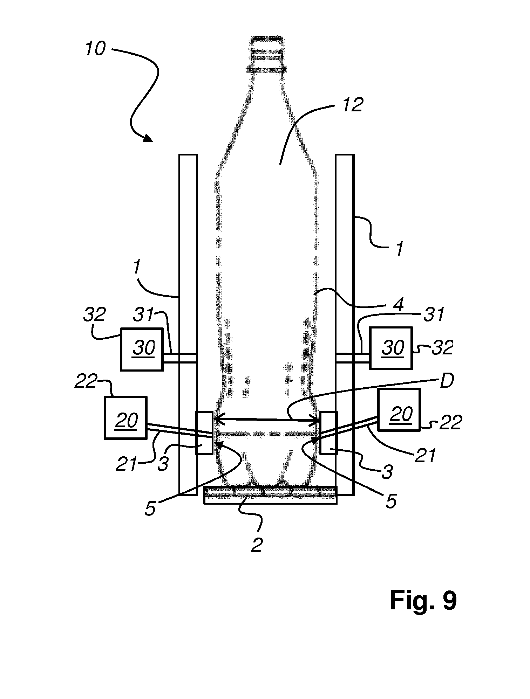

**Figur 8** zeigt eine schematische Darstellung einer Ausführungsform der Einrichtung 10 zum Transportieren von PET-Flaschen 12. In der in Figur 8 gezeigten Darstellung werden die PET-Flaschen 12 einbahnig auf einem Transportband 2, in der Regel, Stoß an Stoß transportiert. Hierzu ist beidseitig des Transportbandes 2 jeweils ein Geländer 1 vorgesehen. Um die Reibung der PET-Flaschen 12 mit dem Geländer 1 weiter zu minimieren, kann mindestens einem der beiden Geländer 1 ein Schmiermittel 20 zugeführt werden. In der hier dargestellten Ausführungsform wird jedem der beidseitig des Transportbandes 2 vorgesehenen Geländer 1 das Schmiermittel 20 zugeführt. Jedes der Geländer 1 trägt einen Führungseinsatz 3, der derart am Geländer 1 ange-bracht ist, dass eine den PET-Flaschen 12 zugewandte Oberfläche 5 des Führungseinsatzes 3 die PET-Flaschen 12 während des Transports berührt. Das Schmiermittel 20 wird über eine Zuführung 21, die als Leitung ausgestaltet sein kann, an die den PET-Flaschen 12 zugewandte Oberfläche 5 des Führungseinsatzes 3 gebracht. Durch die Berührung der PET-Flaschen 12 mit der Oberfläche 5 des Führungseinsatzes 3 wird das Schmiermittel entlang der Oberfläche 5 des Führungseinsatzes 3 verteilt bzw. von den PET-Flaschen 12 mitgenommen. Das Schmiermittel 20 wird aus einem Reservoir 22 entnommen und geregelt der Oberfläche 5 des Führungseinsatzes 3 zugeführt. Obwohl die Darstellung aus Figur 8 beidseitige Reservoirs 22 für Schmiermittel zeigt, soll dies nicht als eine Beschränkung der Erfindung aufgefasst werden. Die Anzahl der Zuführstellen für das Schmiermittel 20 und die Anzahl der erforderlichen Reservoirs richtet sich im Wesentlichen nach den Transportanforderungen. Die Mindestanforderung ist, dass mindestens einer Oberfläche 5 des Führungseinsatzes 3 eines Geländers 1 an mindestens einer Stelle entlang des Geländers 1 das Schmiermittel 20 zugeführt wird. **Figur 9** zeigt eine schematische Ansicht einer weiteren Ausführungsform der Einrichtung 10 zum Transport von PET-Flaschen 12. Der erfindungsgemäße Führungseinsatz 3 kann an mindestens einer Seite, die die zu transportierenden PET-Flaschen 12 berührt, mit einem Schmiermittel 20 und Wasser 30 versehen werden, um die Reibung zwischen der Oberfläche 5 des Führungseinsatzes 3 des Geländers und den PET-Flaschen 12 zu reduzieren. Hierzu wird wie bereits in Fig. 8 beschrieben aus mindestens einem Reservoir 22 das Schmiermittel 20 geregelt und dosiert zugeführt. Zusätzlich zum Schmiermittel 20 kann zur weiteren Reduzierung der Reibung Wasser 30 dem Geländer 1 zugeführt werden. Das Wasser 30 wird ebenfalls aus mindestens einem Reservoir 32 entnommen und durch mindestens eine Zuführung 31, die als Leitung ausgestaltet sein kann, dem Geländer 1 zugeführt. Das Wasser 30 wird ebenfalls derart zugeführt, dass es letztendlich zu der Oberfläche 5 des Führungseinsatzes 3 gelangt. In der in Figur 9 beschriebenen Ausführungsform vermischen sich an der Oberfläche 5 des Führungseinsatzes 3 das zugeführte Schmiermittel 20 und das Wasser 30. Es ist ebenso vorstellbar, dass ausschließlich Wasser zugeführt wird, um die Oberfläche 5 des Führungseinsatzes 3 zu benetzen und somit die Reibung zwischen den zu transportierenden PET-Flaschen 12 und dem Führungseinsatz 3 zu reduzieren bzw. die Reibungsverhältnisse während des Transports der PET-Flaschen 12 innerhalb eines vordefinierten Intervalls zu halten.

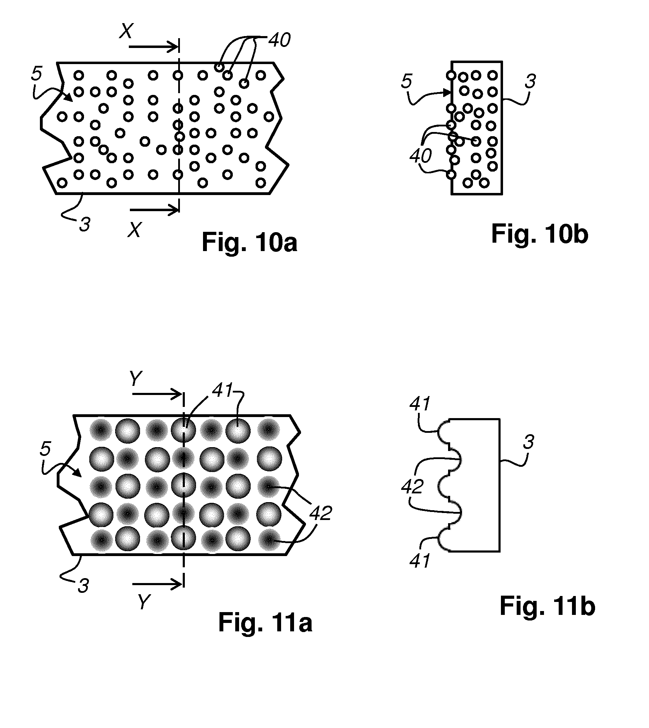

Der Reibwert oder Reibungskoeffizient beschreibt im vorliegenden Fall die Reibkraft, also den Wert der Reibung, der zwischen Geländer 1 bzw. Führungseinsatz 3 und den PET Flaschen 12 (siehe Figur 1). **Figur 10a** zeigt eine schematische Ansicht des erfindungsgemäßen Führungseinsatzes 3, dessen Oberfläche 5, welche die zu transportierenden PET Flaschen 12 berührt, eine Oberflächenstruktur ausgebildet hat, die den Reibwert zwischen dem Führungseinsatz 3 Geländer und den PET Flaschen 12 senkt. Die Oberflächenstruktur wird durch eine Vielzahl von kugelförmigen Elementen 40 gebildet, die im Grundmaterial und/oder Trägermaterial der Führungsschiene oder des Führungseinsatzes 3 eingebettet sind. Einige der kugelförmigen Elemente 40, wie in **Figur 10b** (Querschnitt des Führungseinsatzes 3 gemäß der in Figur 10a gezeigten Schnittline X-X) dargestellt, ragen über die Oberfläche 5 des Führungseinsatzes 3, so dass eine hügelige Oberfläche entsteht. Somit ist die Reibung zwischen den PET-Flaschen 12 und der Oberfläche 5 des Führungseinsatzes 3 reduziert.

Die **Figuren 11a und 11b** zeigen eine andere Ausführungsform, die auf dem gleichen Wirkprinzip beruht, dass die Kontaktfläche zwischen einem oberflächenbehandelten Geländer oder einem Führungseinsatz 3 und den zu transportierenden PET-Flaschen 12 (siehe Figur. 1) Erhöhungen 41 und/oder Vertiefungen 42 ausgebildet hat. Obwohl in Figur 11a und 11b (Querschnitt des Führungseinsatzes 3 gemäß der in Figur 11a gezeigten Schnittline Y-Y) die Erhöhungen 41 und/oder Vertiefungen 42 eine halbkugelige Form ausgebildet haben, soll dies nicht als eine Beschränkung der Erfindung aufgefasst werden. Die Erhöhungen 41 und/oder Vertiefungen 42, die der Führungseinsatz 3 aufweist, können als Rillen, Nuten oder mit einer sonstigen Profilierung ähnlich einer genarbten oder wellenförmigen Kontur ausgebildet werden. Die resultierende Oberfläche des Führungseinsatzes 3 hat insgesamt gesehen eine im Wesentlichen einheitlich zusammenwirkende Anlagefläche im Kontaktbereich der PET-Flaschen 12.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Führungseinsatz (3) für eine Einrichtung (10) zum Transportieren von PET-Flaschen (12), wobei der Führungseinsatz (3) an einem Geländer (1) oder direkt auf einem Tragelement (9) befestigt ist und eine den PET-Flaschen (12) zugewandte Oberfläche (5) des Führungseinsatzes (3) die PET-Flaschen (12) während des Transports berührt,
**dadurch gekennzeichnet, dass**
zumindest die die PET-Flaschen (12) berührende Oberfläche (5) des Führungseinsatzes (3) ein Polymermaterial (P) trägt, welches mit einem Füllstoff versehen ist.

2. Führungseinsatz (3) nach Anspruch 1, wobei das Polymermaterial (P) des Führungseinsatzes (3) PEEKPA, POM, PVC, PE, PE-UHMW oder PE-HD ist.

3. Führungseinsatz (3) nach Anspruch1, wobei der Füllstoff abgerundete oder kugelförmige Elemente aufweist.

4. Führungseinsatz (3) nach Anspruch 3, wobei die abgerundeten Elemente Glasfasern oder die kugelförmigen Elemente Glas- oder Keramikkugeln sind.

5. Führungseinsatz (3) nach einem der vorangehenden Ansprüche, wobei der Führungseinsatz (3) derart oberflächenbehandelt ist, als dass der Führungseinsatz (3) Erhöhungen und/oder Vertiefungen aufweist.

6. Führungseinsatz (3) für eine Einrichtung (10) zum Transportieren von PET-Flaschen (12), wobei der Führungseinsatz (3) an einem Geländer (1) oder direkt auf einem Tragelement (9) befestigt ist und eine den PET-Flaschen (12) zugewandte Oberfläche (5) des Führungseinsatzes (3) die PET-Flaschen (12) während des Transports berührt,
**dadurch gekennzeichnet, dass**
zumindest die die PET-Flaschen (12) berührende Oberfläche (5) des Führungseinsatzes (3) ein Polymermaterial (P) trägt, wobei mindestens eine Oberfläche (5) des Führungseinsatzes (3) an mindestens einer Stelle entlang des Führungseinsatzes (3) ein Schmiermittel (20) zuführbar ist.

7. Führungseinsatz (3) nach Anspruch 6, wobei der Oberfläche (5) des Führungseinsatzes (3) das Schmiermittel (20) und/oder Wasser (30) zuführbar ist, so dass die Reibung zwischen den PET-Flaschen (12) und dem Geländer oder Oberfläche (5) des Führungseinsatzes (3) innerhalb eines vordefinierten Intervalls liegt.

8. Führungseinsatz (3) nach Anspruch 7, wobei aus mindestens einem Reservoir (22) das Schmiermittel (20) und/oder aus mindestens einem Reservoir (32) das Wasser (30) gesteuert und dosiert zuführbar sind, derart dass das Schmiermittel (20) und/oder das Wasser (30) die Oberfläche (5) des Führungseinsatzes (3) benetzen.

9. Führungseinsatz (3) nach Anspruch 8, wobei eine Zuführung (21) für das Schmiermittel (20) und/oder eine Zuführung (31) für Wasser vorgesehen sind.
